# EUROPEAN PATENT SPECIFICATION

(11) **EP 1 679 004 B1**
(45) Date of publication and mention of the grant of the patent: **13.08.2008**
(21) Application number: 04766994.0
(22) Date of filing: 21.09.2004
(51) Int. Cl.: A23B 4/16, B65D 85/50, B65D 81/20, A22C 29/04

(54) **MODIFIED-ATMOSPHERE PRESERVATION OF LIVE BIVALVE SHELLFISH IN A HERMETIC CONTAINER**
AUFBEWAHRUNG VON LEBENDEN BIVALVEN-MUSCHELN UNTER MODIFIZIERTER ATMOSPHÄRE IN EINEM HERMETISCH VERSCHLOSSENEN BEHÄLTNIS
CONSERVATION SOUS ATMOSPHERES MODIFIEES DE MOLLUSQUES BIVALVES VIVANTS DANS UN RECIPIENT HERMETIQUE

(30) Priority: 06.10.2003 ES 200302313
(43) Date of publication of application: 12.07.2006
(73) Proprietor: CONSEJO SUPERIOR DE INVESTIGACIONES CIENTIFICAS, 28006 Madrid (ES)
(72) Inventor: PASTORIZA ENRIQUEZ, Laura C.S.I.C, E-36208 Vigo (ES); SAMPEDRO CEDEIRA, Gabriel C.S.I.C, E-36208 Vigo (ES); BERNARDEZ COSTAS, Maria C.S.I.C, E-36208 Vigo (ES); LOPEZ CABO, Maria C.S.I.C, E-36208 Vigo (ES); RODRIGUEZ HERRERA, Juan J. C.S.I.C, E-36208 Vigo (ES)
(74) Representative: Ungria Lopez, Javier
(86) International application number: PCT/ES2004/070071
(87) International publication number: WO 2005/032265

(56) References cited:
- EP-A1- 0 403 357
- EP-A1- 0 965 271
- EP-A1- 1 063 177
- EP-A1- 1 065 144
- DE-A1- 4 422 832

## Description

### SECTOR OF THE ART

The invention that is claimed comes within the food sector and more specifically the production and distribution of live shellfish for marketing.

### STATE OF THE ART

MAP (modified-atmosphere packaging) technology is being used in the conservation of a wide range of fresh and refrigerated foods, including raw and cooked meats, fish, fresh pasta, fruit and vegetables, and recently coffee, tea and beers. It is a technology that is being applied in the food sector for the packaging of refrigerated products having a limited shelf life and its success is due above all to its effectiveness against the main microbial flora that can be present by chance in food (Stammen K, Gerdes D, Caporaso, F. 1990, Modified atmosphere packaging of seafood. Crit. Rev. Food Sci. Nutr. 29:301-331; Devlieghere F, Debevere J. 2000. Influence of dissolved carbon dioxide on the growth of spoilage bacteria. Lebensm. Wiss. Technol. 33:531-537; Cutter CN, 2002. Microbial control by packaging: a review. Crit Rev Food Sci Nutr 42:151-161). The advantages and disadvantages of using the MAP technique have been periodically reviewed (Farber JM. 1991. Microbiological aspects of modified-atmosphere packaging. A review. J. Food Protect. 54:58-70; Parry RT. 1993. In: Principles and Applications of Modified Atmosphere Packaging of Food. Parry RT, editor. Glasgow, UK, Blackie. P 1-18; Davies AR. 1995. Advances in Modified-atmosphere packaging. In: Gould GW, editor. New Methods of Food Preservation. Glasgow, UK: Blackie. P 304-320; Church JJ, Parsons AL. 1995. Modified atmosphere packaging technology: A review. J. Sci. Food Agric. 67:14-152.; Philips CA. 1996. Review: Modified Atmosphere Packaging and its effects on the microbiological quality and safety of produce. Int J Sci Technol 31:463-479), and many studies have been conducted on all kinds of foods, both fresh (Pastoriza L, Sampedro G, Herrera JR, Cabo ML. 1996. Effect of modified atmosphere packaging on shelf-life of iced fresh hake slices. J. Sci. Food Agric. 71:541-6547; Dalgaard P. García Muñoz L, Mejlholm O. 1998. Specific inhibition of Photobacterium phosphoreum extends the shelf life of modified-atmosphere-packed cod fillets. J. Food Protect. 61:1191-1194) or defrosted (Emborg J, Laursen BG, Rathjen T, Dalgaard P. 2002. Microbial spoilage and formation of biogenic amines in fresh and thawed modified atmosphere packed salmon (Salmo salar) at 2°C. J. Appl. Microbiol. 92:790-799), and also cooked, pre-cooked, prepared dishes, etc. (Cabo ML, Pastoriza L, Bernárdez M, Herrera JR. 2001. Effectiveness of CO2 and nisin to increase shelf life of fresh pizza. Food Microbiol. 18:489-498; Pastoriza L, Cabo ML, Bernárdez M, Sampedro G, Herrera JR. 2002. Combined effects of MAP and lauric acid on stability of refrigerated pre-cooked fish products. EUR Food Res. Technol. 215:189-193), for achieving greater stabilisation of the quality during marketing. Nevertheless, there is still a very low degree of knowledge when it comes to the application of this technique in the stabilisation of live shellfish, which would likewise permit a packaged product to be offered with a shelf life longer than that at which products are currently marketed. In these cases, the gas composition is different, and in the end it concerns a product that is still alive, and so it is therefore necessary to create an ambience in which the bivalve can survive. Studies by Coleman (Coleman, 1973. The oxygen consumption of Mytilus edulis in air. Com. Biochem. Physiol. 45:392-402), Widdows et al. (1979), Shick J M, Gnaiger E, Widdows J, Bayne B L, de Zwaan. 1986. Activity and metabolism in the mussel Mytilus edulis 1. During intertidal hypoxia and aerobic recovery. Physiol. Zool. 59:627-642) confirmed that bivalves out of water maintain their metabolism at the expense of using atmospheric oxygen. Also, the intervalvular sea-water that they maintain between their shells permits them to live by changing their metabolism.

The mussel industry is not a very innovative sector when it comes to methods or techniques used in the marketing of live mussels. It currently continues to use techniques very similar to those used in the past, consisting solely of extracting the mussels in the culture plot, declumping them, cleaning them, sometimes debyssing, surface cleaning of the valves and packaging. The greatest differences are on account of mechanisation in some of the stages of the process taking the place of manual work, for example brushing and/or debyssing can be cited. It is a technology which continues to be fairly artisanal.

EP-0965271 discloses a process for conserving live bivalve shellfishes, through the introduction of nitrogen alone, or combined with carbon dioxide and/or oxygen into the packaging, wherein vacuum has been previously made. This process includes debarbing, cleaning and debyssing - in case of mussels - the bivalves, disposing the same into the packages, to make vacuum and to inject the nitrogen (eventually with another gas) and closing the packages. The bivalves are later maintained at between 3°C and 8°C.

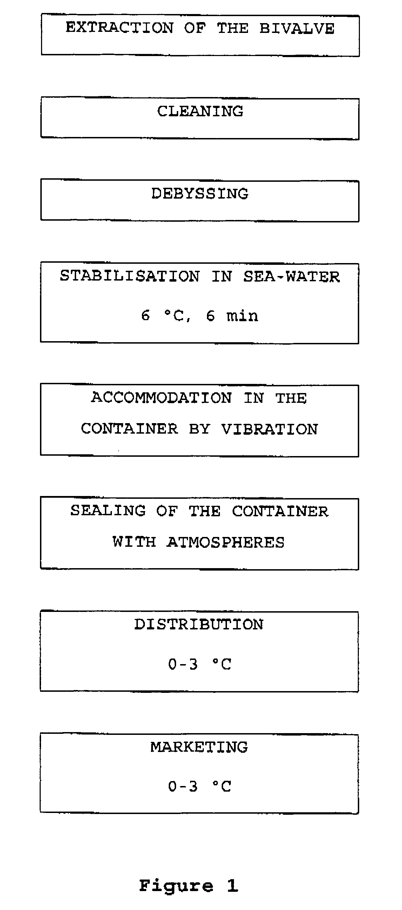

DE4422832 discloses a process for the elaboration of mussels and the packaging thereof. Said process comprises: cleaning, separating from each other, and/or classification of the mussels; maintenance of the animals during a period in salt water, during said period the sea water is cooled up to less than 10°C; packaging of the animals at a temperature under 10°C and closing of the packaging. The animals are stabilised thanks to the stabilisation stage in salt water after the mechanical treatment they have undergone. According to an embodiment, shown in figure 1, the mussels are introduced in a cool unit after having been cleaned and separated, and in said unit, salt water at a temperature between 0 and 5°C is continuously filtered and/or replaced. Preferably air or oxygen are also injected in order to maintain the exchange of products of the mussels. Also a bactericide is used, like ozone or UV light in the cooling unit. After several hours in the cooling unit - between 0.5 and 24 hours -, the mussels are cleansed with tap water or sterilised water at a temperature of about 0-5°C during about 5 minutes.

EP-0403357 discloses a process for preserving alive sea animals, like fishes, shellfishes and crustaceans, said process comprises: lowering the pressure surrounding the animal until about 4.5 - 8 mbar; returning the pressure to the atmospheric value, packaging the animals in a package with an opening and covering the opening with a membrane of an elastomere, maintaining the packages at 0°C.

EP-1063177 discloses a method for packaging and treating alive bivalves. The basis of the method is that the bivalves can adopt either an aerobic or anaerobic metabolism, and on the fact that the animals can only take up oxygen dissolved in a liquid, but not oxygen in a gaseous state. According to a first embodiment the animals are brought into a chamber at a subatmospheric pressure and containing at least an amount of oxygen. According to a second embodiment, any vacuum-packaging machine can be used to create the subatmospheric pressure. Also it is indicated that before processing the bivalves, they are stored for a certain time in their natural habitat to "recover from stress". Said storage is made in containers with sea water, or the animals are sprinkled with sea water. The gas used in the packaging is ambient air, or a gas mixture of oxygen and CO₂.

EP-1065144 discloses a method for packaging mussels comprising the introduction of an amount of living shellfish into a leakproof contaniner, the supply of a protective gas atmosphere and an amount of preservative to prevent the growth of bacteria. Said preservative is NaCl and an acid buffer selected among citric acid citrate and lactic acid lactate.

The presentations normally used in packaging live mussels for marketing consist of mesh bags of 1, 2, 5, 10, 15, 25 and 50 kg, wooden boxes of 2 and 5 kg, and plastic boxes of 5 kg. Even though they are used, none of these packagings are sufficiently practical and they need to be improved. The greatest disadvantages shown by mesh bags is the inconvenience and lack of hygiene implied by continual drainage coming from the intervalvular liquid of the shellfish. Similar problems are shown by wooden boxes, since they are not hermetic, as well as being too heavy, which does not make for easy handling during the marketing and sale stages. In the case of bags, the drainage problem has sought to be solved by introducing them into cardboard boxes at the moment of distribution. Plastic boxes, being totally sealed containers, do not occasion the inconveniences of dripping, but the shellfish are in contact with air, which is not the most suitable ambience for keeping the bivalve alive once it is out of its natural habitat.

In relation to the small sealed and impermeable packaging, a German company Roem van Yerseke, markets and exports live mussels in polystyrene containers. At the moment of sealing the container, a considerable amount of interior air is eliminated by creating a partial vacuum in the actual packaging machine.

The results are considered to be of enormous interest for the mussel industry of Galicia since it concerns the most popular bivalve on the Spanish market, on account of its volume of sales and its price. It is also much appreciated, not just because of the excellent quality of its flesh but also because of its size and the very important levels reached by its production (approximately 262,000 tons/year, representing 45% of world production), which turns it into an important raw material on both the domestic and the international markets.

### BRIEF DESCRIPTION OF THE INVENTION

The invention relates to a method of preserving live bivalve shellfish based on the use of a modified atmosphere rich in a composition of oxygen, with a second component, nitrogen, with the aim of maintaining the bivalve shellfish alive for their marketing, safeguarding the quality of that food for as long as possible throughout the marketing and sales process.

The most suitable concentrations corresponding to a particular embodiment of this invention for mussels are approximately 80% oxygen and 20% nitrogen, in concentration.

The shellfish sales packaging must be full and well compacted, for which purpose the units must be perfectly inserted during the filling operation using a vibrator, such that throughout the sales process the bivalve shellfish do not have the opportunity of opening their valves and losing the intervalvular liquid. A refrigerated sea-water bath is used for submerging the bivalves in the stage following the debyssing with the aim of stabilising the shellfish.

### DETAILED DESCRIPTION OF THE INVENTION

In order to increase the range of presentations of fresh shellfish on the market, this patent was aimed at creating an atmosphere different from air and better suited for permitting the mussel to stay alive, hermetically packed and maintaining a natural and fresh appearance, guaranteeing its quality for a period of time greater than that of standard treatment (air), in the refrigerated state and under optimum conditions for being marketed. As this concerns a live product, interest was focused on achieving stability and increasing its period of life, maintaining the response capacity and the sensorial qualities that the consumer demands.

The authors of this patent demonstrate greater survival for the bivalves during marketing, achieving compositions of gas mixtures which favour respiration and are less injurious for the bivalves than others containing CO₂ which are typical of other packaged foods. The fact that the intervalvular metabolism of any bivalve excretes CO₂ gas among other substances would cause the concentration of this gas to increase in a sealed container where this component had previously been introduced, with toxic levels being able to be reached for the live organism. The authors have already observed that the presence of carbon dioxide in the initial gaseous composition favours the mortality of shellfish (values unpublished). Operations prior to packaging are also included.

This novel system starts from the conventional system of the typical processing of fresh marketable bivalve shellfish (extraction of the mussel in the culture park, declumping, cleaning, sometimes debyssing, surface cleaning of the valves and packaging) though novel suitable stages and systems are introduced and claimed for achieving greater survival of this organism.

According to the present invention the method of preserving live bivalve shellfish using modified atmospheres in a hermetic container, is characterised by comprising the following stages:
● cleaning of the mussels,
● superficial cleaning of the valves, and debyssing of mussels,
● stabilization of the mussels in a bath of sea-water previously purified and refrigerated at low temperatures, preferably at 6°C, during 6 minutes stabilisation
● filling of the container
● accomodation and compactation of the mussels in the container,
● application of modified atmospheres containing at least 50% oxygen and without the addition of CO₂
● sealing at atmospheric pressure
● refrigeration at between 0 and 3 °C.

According to particular embodiments the method includes:
a) A refrigerated sea-water immersion bath following the debyssing so that the shellfish, which was stressed and injured during the debyssing operation, can recover in a short space of time.
b) The following stage that is included is that of **filling** of the product in plastic containers. The filling with bivalves will be done so as to take up the entire volume of the interior of the plastic container.
c) The **accommodation** that then follows is done by a vibrator in contact with the bottom of the container, and a level of filling must be achieved that is no less than the height corresponding to the closure of the container so that the bivalves do not have the opportunity of being able to open their valves and lose the intervalvular liquid.
d) The system of filling with modified atmospheres and sealing is done immediately afterwards.

The mixture of gases that has to remain inside the sealed container must contain approximately 80% of oxygen and 20% of nitrogen. The provision of the gas is done with a predetermined mixture (O₂ / N₂; 80% / 20%), or by oxygen (100% concentration) both marketed. In the latter case the 20% composition that would correspond to nitrogen is provided by means of air being added by the filling equipment so that the interior composition can be approximately 80% O₂ and 20% N₂ as is intended. The sealing, which is done by the same equipment and for filling with atmosphere, has to be hermetic. The plastic sealing film will tighten the content of bivalves preventing them from moving.

According to particular embodiments the application of the modified atmosphere with which the container is filled consists of applying a concentration of oxygen of between 50 and 90%, preferably 80% of oxygen and 20% nitrogen, with the rest being mostly nitrogen whether by means of a commercial mixture or a mixture in situ.

According to additional particular embodiments, in the method of preserving live in accordance with the invention, the application of the modified atmosphere with which the container is filled consists of applying 100% O₂ and air up to achieving a mixture of gases having a concentration of oxygen of between 50-90%, preferably, a concentration of oxygen of between 75-80%.

According to additional particular embodiments, in the method of preserving live in accordance with the invention, the modified atmosphere consists of 100% O₂, previously applying a light vacuum with which, with the remnant air, a mixture of gases is achieved having a concentration of oxygen of between 50 and 90%, preferably of between 75-80% of oxygen.

The following phases are the usual ones in the marketing of these products, though the results, survival to 6 days, are subject to the temperature being kept at 0-3°C.

### Advantages in relation to the conventional art or others

It improves the presentation of the bivalves, it minimises spillages of intervalvular water due to the fact that the shells remain closed by the pressure exerted among the units.

The high concentration of oxygen does not alter the product as in the case of containers with dead food. The dissolution of the oxygen in the intervalvular liquid is favoured by applying lower refrigeration temperatures (0-3°C). The uptake of oxygen by the living organism is more efficient.

The evident mortality of organisms adhered to the outside surface of the shells (barnacles, tubiforms, etc.) is slower than in the case of bivalves marketed in contact with air, or with gas mixtures containing CO₂ (which are toxic for living organisms) at ambient temperatures or unsuitable refrigeration temperatures. The effect of the death of these small accompanying organisms is the production of undesirable odours, especially in sealed containers.

The quality of the product is improved in relation to the conventional art given equal storage times. The greater survival rate extends the marketing network further. There is a reduction in rejects owing to dead shellfish.

### EXAMPLES

### Example 1 Processing of mussels in a protective atmosphere applying a commercial gas mixture

After keeping the shellfish in cleaning pools for 48 hours, they will be mechanically debyssed by equipment known in the industry. A surface cleaning of the shells will be carried out in order to remove the majority of organisms stuck to the surface.

The shellfish is introduced into tanks of refrigerated sea-water (6 °C) by means of a hoist containing perforated baskets which submerge the bivalve for up to 6 minutes.

A grader selects batches of units weighing around 1 kg, and units that are broken or show signs of mortality will be discarded. These batches are introduced into rectangular containers made of a barrier plastic material of the PE-HD type of dimensions 264 x 165 x 51 cm, for example.

The operation of filling the atmosphere can take place by coupling a bottle to the machine, the bottle being supplied by a gas supplier firm and having a volumetric composition of O₂ / N₂; 80% / 20%. The machine itself will proceed to seal the container with a barrier film of the GPO1570 type, for example. The process is cheap and, in a short period of time, the living organism is subjected to high vacuum conditions.

The immediate quality control consists of checking the airtightness of the seal. The container must not be swollen, and the pressure inside must be atmospheric. The sealing of the container is checked by submerging it in water and making sure that no bubbles appear.

Shellfish that are broken, defects in the seal and cuts in the film produced by the sharp edges of the bivalve are all cause for rejection.

### Example 2 Processing of mussels in a protective atmosphere applying pure commercial gases with in situ mixing

All steps described in example 1 will be performed except that pure commercial gases are applied, which are mixed in situ by means of the corresponding flowmeters indicating the quantity of each gas; an expansion chamber can be inserted in the line in order to ensure homogenous mixing at the moment of packaging, or the gases can be applied directly and mixed in the container. The flow of oxygen is four times greater than that of nitrogen in order to achieve the composition O₂ / N₂; 80% / 20%.

### Example 3 Processing of mussels in a protective atmosphere applying just oxygen

All the steps described in example 1 will be performed except in the filling which will be more economical due to using just one gas coming from a bottle containing 100% oxygen. The handling of the filling system for the machine can achieve less evacuation of air in the system by producing a partial vacuum in order to achieve mixtures with a composition of 80% oxygen and 20% air (the composition of which is mostly nitrogen). Fine adjustment of this system requires precise control of the sealing machine and previous testing with regard to the arrangement of the controls for the equipment and also checking of the composition of the filling gas in empty containers. Suitable, easy to handle, equipment for determining gas compositions can be acquired from Spanish companies.

### BRIEF DESCRIPTION OF THE FIGURES

Figure 1 shows mussel processing in diagrammatic form. The conventional line starts with the extraction of the mollusc and ends in the debyssing for being bagged. We include a stabilisation stage for the live organism, application of atmospheres, sealing and marketing in a cold environment.

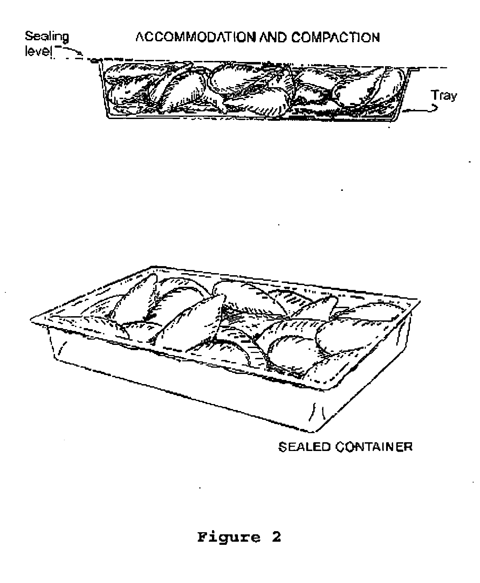

Notable in Figure 2 is the arrangement of the shellfish after they have been accommodated and compacted. The line of the level of the tray sealing indicates the filling height of the bivalve. The external appearance of a sealed container can also be seen.

## Claims

1. Method of preserving live mussels using modified atmospheres in a hermetic container, **characterised by** comprising the following stages:
• cleaning of the mussels,
• superficial cleaning of the valves, and debyssing of mussels,
• stabilization of the mussels in a bath of sea-water previously purified and refrigerated at low temperatures, preferably at 6°C, during 6 minutes
• filling of the container
• accomodation and compactation of the mussels in the container,
• application of modified atmospheres containing at least 50% oxygen and without the addition of CO₂
• sealing at atmospheric pressure
• refrigeration at between 0 and 3 °C.

2. Method of preserving live mussels using modified atmospheres in a hermetic container in accordance with claim 1, **characterised in that** the modified atmosphere consists of a concentration of oxygen of between 50 and 90% with the rest being mostly nitrogen.

3. Method of preserving live mussels using modified atmospheres in a hermetic container in accordance with claim 2, **characterised in that** the modified atmosphere consists of a concentration of 80% oxygen and 20% nitrogen.

4. Method of preserving live mussels using modified atmospheres in a hermetic container in accordance with claim 1, **characterised in that** the application of the modified atmosphere with which the container is filled consists of applying 100% O₂ and air up to achieving a mixture of gases having a concentration of oxygen of between 50-90%.

5. Method of preserving live mussels using modified atmospheres in a hermetic container in accordance with claim 4, **characterised in that** the application of the modified atmosphere with which the container is filled consists of applying 100% O₂ and air up to achieving a mixture of gases having a concentration of oxygen of between 75-80%.

6. Method of preserving live mussels using modified atmospheres in a hermetic container in accordance with claim 1, **characterised in that** the modified atmosphere consists of 100% O₂, previously applying a light vacuum with which, with the remnant air, a mixture of gases is achieved having a concentration of oxygen of between 50 and 90%.

7. Method of preserving live mussels in accordance with claim 6, **characterised in that** the modified atmosphere consists of applying 100% O₂, previously applying a light vacuum with which, with the remnant air, a mixture of gases is achieved having a concentration of oxygen of between 75-80%.

## Patentansprüche

1. Verfahren zum Konservieren von lebenden Muscheln unter Verwendung von modifizierten Atmosphären in einem hermetischen Behälter, **dadurch gekennzeichnet dass** es die folgenden Stufen umfasst:
• Reinigung der Muscheln,
• oberflächliche Reinigung der Klappen und Entfernen des Byssus der Muscheln,
• Stabilisierung der Muscheln in einem Bad aus vorher gereinigtem und auf niedrige Temperaturen, vorzugsweise auf 6 °C. gekühltem Meerwasser, während 6 Minuten
• Füllen des Behälters
• Unterbringung und Verdichtung der Muscheln in dem Behälter,
• Anwendung von modifizierten Atmosphären, die wenigstens 50 % Sauersoff enthalten, und ohne die Zugabe von CO₂
• Versiegeln bei Atmosphärendruck
• Kühlung auf Temperaturen zwischen 0 und 3 °C.

2. Verfahren zum Konservieren von lebenden Muscheln unter Verwendung von modifizierten Atmosphären in einem hermetischen Behälter gemäß Anspruch 1, **dadurch gekennzeichnet, dass** die modifiziert Atmosphäre aus einer Sauerstoffkonzentration zwischen 50 und 90 % besteht, wobei der Rest hauptsächlich Stickstoff ist.

3. Verfahren zum Konservieren von lebenden Muscheln unter Verwendung von modifizierten Atmosphären in einem hermetischen Behälter gemäß Anspruch 2, **dadurch gekennzeichnet, dass** die modifizierte Atmosphäre aus einer Konzentration von 80 % Sauerstoff und 20 % Stickstoff besteht.

4. Verfahren zum Konservieren von lebenden Muscheln unter Verwendung von modifizierten Atmosphären in einem hermetischen Behälter gemäß Anspruch 1, **dadurch gekennzeichnet, dass** die Anwendung der modifizierten Atmosphäre, mit der der Behälter gefüllt wird, aus dem Anwenden von 100 % O₂ und Luft bis zum Erzielen einer Mischung von Gasen mit einer Sauerstoffkonzentration zwischen 50-90 % besteht.

5. Verfahren zum konservieren von lebenden Muscheln unter Verwendung von modifizierten Atmosphären in einem hermetischen Behälter gemäß Anspruch 4, **dadurch gekennzeichnet, dass** die Anwendung der modifizierten Atmosphäre, mit der der Behälter gefüllt wird, aus dem Anwenden von 100 % O₂ und Luft bis zum Erzielen einer Mischung von Gasen mit einer Sauerstoffkonzentration zwischen 75-80 % besteht

6. Verfahren zum Konservieren von lebenden Muscheln unter Verwendung von modifizierten Atmosphären in einem hermetischen Behälter gemäß Anspruch 1, **dadurch gekennzeichnet, dass** die modifizierte Atmosphäre aus 100 % O₂ besteht, wobei vorher ein leichtes Vakuum angewandt wird, mit welchem, zusammen mit der übrig gebliebenen Luft, eine Mischung von Gasen mit einer Sauerstoffkonzentration zwischen 50 und 90 % erzielt wird.

7. Verfahren zum Konservieren von lebenden Muscheln gemäß Anspruch 6, **dadurch gekennzeichnet, dass** die modifizierte Atmosphäre aus dem Anwenden von 100 % O₂ besteht, wobei vorher ein leichtes Vakuums angewandt wird, mit welchem, zusammen mit der übrig gebliebenen Lutt, eine Mischung von Gasen mit einer Sauerstoffkonzentration zwischen 75-80 % erzielt wird.

## Revendications

1. Procédé pour conserver des moules vivantes en utilisant les atmosphères modifiées dans un récipient hermétique, **caractérisé en ce qu'**il comprend les étapes suivantes consistant à :
- nettoyer les moules,
- nettoyer superficiellement les valves, et retirer le byssus des moules,
stabiliser les moules dans un bain d'eau de mer préalablement purifié et refroidi à basses températures, de préférence à 6°C, pendant 6 minutes,
- remplir le récipient,
- placer et compacter les moules dans le récipient, appliquer les atmosphères modifiées comprenant au moins 50 % d'oxygène, sans ajouter de CO₂,
- réaliser l'étanchéité sous pression atmosphérique,
- réfrigérer entre 0 et 3°C.

2. Procédé pour conserver des moules vivantes en utilisant des atmosphères modifiées dans un récipient hermétique selon la revendication 1, **caractérisé en ce que** l'atmosphère modifiée se compose d'une concentration d'oxygène comprise entre 50 et 90 %, dont le reste est principalement de l'azote.

3. Procédé pour conserver des moules vivants en utilisant des atmosphères modifiées dans un récipient hermétique selon la revendication 2, **caractérisé en ce que** l'atmosphère modifiée se compose d'une concentration de 80 % d'oxygène et de 20 % d'azote.

4. Procédé pour conserver des moules vivantes en utilisant des atmosphères modifiées dans un récipient hermétique selon la revendication 1, **caractérisé en ce que** l'application d'atmosphère modifiée avec laquelle le récipient est rempli, consiste à appliquer 100 % de O₂ et de l'air jusqu'à obtenir un mélange de gaz ayant une concentration d'oxygène comprise entre 50 et 90 %.

5. Procédé pour conserver des moules vivantes en utilisant les atmosphères modifiées dans un récipient hermétique selon la revendication 4, **caractérisé en ce que** l'application de l'atmosphère modifiée avec laquelle le récipient est rempli, consiste à appliquer 100 % de O₂ et de l'air jusqu'à obtenir un mélange de gaz ayant une concentration d'oxygène comprise entre 75 et 80 %.

6. Procédé pour conserver des moules vivantes en utilisant les atmosphères modifiées dans un récipient hermétique selon la revendication 1, **caractérisé en ce que** l'atmosphère modifiée consiste à appliquer 100 % de O₂, en appliquant au préalable un léger vide avec lequel, avec l'air résiduel, on obtient un mélange de gaz ayant une concentration d'oxygène comprise entre 50 et 90 %.

7. Procédé pour conserver des moules vivantes selon la revendication 6, **caractérise en ce que** l'atmosphère modifiée consiste à appliquer 100 % de O₂, en appliquant au préalable un léger vide avec lequel, avec l'air résiduel, on obtient un mélange de gaz ayant une concentration d'oxygène comprise entre 75 et 80 %.
